# EUROPÄISCHE PATENTSCHRIFT

(11) **EP 2 639 043 B1**
(45) Veröffentlichungstag und Bekanntmachung des Hinweises auf die Patenterteilung: **18.04.2018**
(21) Anmeldenummer: 13001283.4
(22) Anmeldetag: 13.03.2013
(51) Int. Cl.: B29C 53/08

(54) **Vorrichtung zur Umformung eines Kunststoffhohlprofil-Werkstücks in einen Bogen und Formleiste hierzu**
Device for forming a plastic hollow profile workpiece into an arc and forming bar therefor
Dispositif destiné à la déformation d'une pièce usinée de profilé creux en matière plastique en arc et bord de forme correspondant

(30) Priorität: 15.03.2012 DE 202012002604 U
(43) Veröffentlichungstag der Anmeldung: 18.09.2013
(73) Patentinhaber: Maschinen Witte GmbH + Co.KG, 49176 Hilter (DE)
(72) Erfinder: Witte Heinz-Dieter, 49176 Hilter (DE); Holzlöhner Uwe, 49201 Dissen (DE)
(74) Vertreter: Wischmeyer, André

(56) Entgegenhaltungen:
- WO-A1-2006/005942
- DE-A1- 3 020 922

## Beschreibung

Die Erfindung betrifft eine Vorrichtung zur Umformung eines auf eine Warmformtemperatur erhitzten geraden lang gestreckten Kunststoffhohlprofil-Werkstücks in einen Bogen nach dem Oberbegriff des Anspruchs 1 sowie eine Formleiste hierzu nach dem Oberbegriff des Anspruchs 14.

Kunststoffhohlprofile sind als Strangpressprofile in komplexen Formen herstellbar, sowohl in Bezug auf die Außenkontur wie auch auf eine ggf. mit vielen Kammern bzw. Kanälen gegliederte Innenkontur. Dabei ist auch eine hohe Präzision in Bezug auf den Profilquerschnitt zu nutzen, wenn etwa Fensterflügel und Fensterrahmen mit geringem Spaltmaß zu schließen sein sollen und die verbleibenden Spalte gleichmäßig und durch Dichtungen präzise geschlossen werden sollen. Die hohen Anforderungen an die Formgenauigkeit sind besonders problematisch dann, wenn die ursprünglich in gerader Form stranggepressten Kunststoffhohlprofile eine Bogenform erhalten sollen. Im warmverformbaren Zustand kommt es leicht zu Querschnittsveränderungen, die das gebogene Werkstück unbrauchbar machen. Insofern ist eine querschnittswahrende Verformung eines Kunststoffhohlprofil-Werkstücks zu einem Bogen eine von Haus aus anspruchsvolle Zielsetzung.

Eine gute Umformungsqualität bei Kunststoffhohlprofil-Bögen ist mit Vorrichtungen nach der DE 30 20 922 A1 zu erzielen, nach der die Werkstücke im erweichten Zustand der Länge nach durch eine Formschablone gezogen werden. Allerdings ist die Handhabung aufwändig, da das Werkstück in einem Kopfbereich an ein Ziehwerkzeug anzuschließen ist. Vorteilhaft eignet sich dieses Verfahren für Werkstücke, die insgesamt zu einem einheitlichen Bogen umgeformt werden. Ein solcher Bogen geht aber bei Tür- oder Fensterprofilen regelmäßig in gerade Abschnitte gleichen Kunststoffhohlprofils über und müsste ggf. an gerade Werkstücke angeschweißt werden. Nach dem bekannten Ziehverfahren lassen sich zwar auch durchgehende Werkstücke mit bogenförmigen und geraden Bereichen fertigen, zwingen aber dabei zu einer Rückverformung bereits gebogener Abschnitte zu geraden Abschnitten bei vorlaufenden Bereichen. Überdies bedarf es dann sehr langer Formschablonen, sehr langer auf eine Warmformtemperatur erhitzter Werkstücke und auch zunehmend kritischer Ziehkräfte bei der Ziehverformung.

Demgegenüber bietet eine Biegevorrichtung nach der DE 20 53 318 die Möglichkeit, Kunststoffhohlprofil-Werkstücke, auf eine Warmformtemperatur erwärmt und bogenaußenseitig durch eine biegsame profilgerechte Formleiste abgestützt, um eine Innenbogenschablone zu biegen, die ebenfalls profilgerechte Anlageflächen aufweist.

Dabei wird vorgesehen, dass Andruckköpfe in Rollenform von einer Mittelstellung aus die vorgesehene Innenbogenkontur abfahren und das Werkstück mit nach außen wandernden Druckbereichen an die Innenschablone andrücken. Diese Arbeitsweise ermöglicht eine einfache Zuführung des auf Warmformtemperatur erwärmten Werkstücks und erlaubt es auch, einen Teil-Bereich eines Werkstücks zu einem Bogen umzuformen, ohne ein- oder beidseitig überstehende Enden zu verformen. Diese können dabei sogar einen kalten Ausgangszustand behalten mit Vorteilen in der begrenzten Aufheizung und in der Handhabung beim Umformen des Werkstücks. Allerdings hat sich die Umformung mit wanderndem Andruckbereich als sehr problematisch hinsichtlich der zu erzielenden Querschnittstreue und hinsichtlich einer von Ausbauchungen und Stauchungswellen freien Oberfläche herausgestellt.

Der WO 2006/005942 A1 ist ein Biegeapparat für gerade Werkstücke, insbesondere für thermisch erweichte PVC-Kunststoffhohlprofile, zu entnehmen, die um eine variable Innenschablone zu biegen sind. Die Innenschablone wird dabei innenseitig punktuell über Stützpunkte festgelegt, die mit Hilfe von Schubketten zu verlagern sind. Der Biegevorgang wird dabei gerätetechnisch nicht gesteuert, wie es für eine querschnittstreue und glattflächige Umformung vorauszusetzen wäre.

Eine variable (Teil-)Bogenform ist auch mit einer Biegevorrichtung nach der DE 694 01 016 T2 vorzugeben. Dabei wird ein verformbares Werkstück aus Gummi, ggf. auch mit einem Kerndraht, zwischen zwei Presswerkzeuge eingeschoben und mit den Presswerkzeugen durch druckmittelbetätigte Stellglieder gegen eine variable Pressschablone angedrückt und zwar zunächst an den Enden und dann zur Mitte fortschreitend. Die das Werkstück fest einschließenden Presswerkzeuge erfahren beim Biegen allerdings Verschiebungen gegeneinander und gegenüber dem Werkstück, die für bei einem Kunststoff-Hohlprofil unzulässige Verformungen im Querschnitt und in der Oberfläche hervorrufen würden.

Aufgabe der Erfindung ist es, eine Vorrichtung zur Umformung eines zumindest bereichsweise auf eine Warmformtemperatur erhitzten geraden lang gestreckten Kunststoffhohlprofil-Werkstücks in einen Bogen zu schaffen, die eine auf Bereiche des Werkstücks begrenzte Bogenverformung und einen guten Zugang des Werkstücks zur Vorrichtung ermöglicht, dabei aber eine verbesserte Verformungsqualität erzielt und insbesondere die Werkstück-Querschnitte verformungsfrei sowie glatt und winkelgerecht in der Oberfläche erhält. Aufgabe der Erfindung ist es weiterhin, eine Formleiste zu schaffen, die die Bogenformung unterstützt und verbessert. Gemäß der Erfindung wird diese Aufgabe von einer Vorrichtung nach dem Oberbegriff des Anspruchs 1 ausgehend mit den kennzeichnenden Merkmalen des Anspruchs 1 gelöst. Die erfindungsgemäße Lösung erlaubt wie beim Stand der Technik nach der DE 20 53 318 eine einfache und schnelle Arbeitsweise, bei der die ganz oder abschnittsweise erwärmten Werkstücke auf eine Arbeitsebene aufgebracht und auf dieser Arbeitsebene quer zu ihrer Längserstreckung gebogen werden. Dabei wird hier jedoch eine ganzheitliche gleichförmige und minimierte Verformung dadurch erzielt, dass die Andruckköpfe beabstandet und damit außenseitig an der außen liegenden Formleiste angreifen und so die Bogenform von den äußeren Bereichen her gleichförmig biegen, bis die vorgegebene Endform durch Anlage an der Innenschablone erzielt ist. Eine Einwirkung der Andruckköpfe in der Art des Standes der Technik, die einen wandernden Anpressdruck zunächst nur an einem Innenbereich bzw. an einem Bogenscheitel aufbaut und dann durch Anrollen an die Innenschablone nach außen hin fortschreitend mit hohen Querschnittsbelastungen erzielt, wird vermieden. Der außenseitige Angriff der Andruckköpfe an der Formleiste und über diese indirekt am Werkstück führt auch zu einer tendenziell streckenden oder ziehenden Beanspruchung der Formleiste und des Werkstücks mit Vorteilen für eine bei der Verformung zu erhaltende Querschnittstreue und für eine ebenmäßig zu erhaltende Oberfläche des Werkstücks.

Formleisten der hier betrachteten Art aus festem aber biegsamen Werkstoff, mit einem an das Profil des Werkstücks angepassten (Negativ-)Profil und aufgrund von Quereinschnitten querschnittsgetreu biegbar, sind im Stand der Technik, etwa nach der DE 20 533 318 A, der DE 30 20 922 A1 oder der DE 198 06 426 A1 insoweit bekannt. Bei Formleisten, die während der Umformung am Werkstück anliegen, verlagern sich Anlageflächen gegenüber dem Werkstück beim Biegen in Abhängigkeit von der Tiefe der Quereinschnitte von einer oder von beiden Seiten, womit bei den Kunststoffhohlprofilen besonders heiklen Oberflächenverformung entgegengewirkt werden kann.

Der schonend formende Werkzeugangriff kann weiterhin dadurch gestaltet werden, dass das Werkstück auch auf der Innenseite durch eine profilgerecht angepasste Formleiste abgestützt wird, die sich bei dem Formvorgang insbesondere elastisch fortschreitend mit biegt, dabei aber an dem Werkstück Andruck verteilend anliegt und auch bei der Anlage an der Innenbogenschablone in einer ggf. stärker druckbeaufschlagten Endstellung Stabilisierungs- und Formungsfunktionen übernimmt. Bei heiklen Kunststoffprofilen, insbesondere bei dünnwandigen Mehrkammerprofilen, können ferner passende Profileinlagen, der Länge nach eingezogen, zur Innenabstützung vorgesehen werden.

Zweckmäßig kann die Andruckeinrichtung zwischen den Andruckköpfen zumindest ein weiteres, auf eine Andruck-Endstellung eingestelltes Andruckelement aufweisen. Insofern ist die gewünschte Bogenform nicht nur an außenliegenden Punkten sondern auch an zwischenliegenden Punkten vorgebbar, um insbesondere in der Endstellung den gewünschten Bogen mit Andruck von außen festzulegen. Im Sinne einer schonenden Bogenformung wird ein flexibles Zugelement, das mit den Andruckköpfen verbunden ist, vorgezogen. Dies kann eine Kette oder ein Gurt aus flexiblem Material sein, um die außen liegende Formleiste beim Biegevorgang gleichmäßig abzustützen und um in der Endstellung gleichmäßig verteilte Anpresskräfte auf die gesamte Bogenlänge des Werkstücks aufzubringen.

Die Umformung des Werkstücks in einer Vorrichtung der hier betrachteten Art könnte grundsätzlich insgesamt handbetätigt ausgeführt werden, wird aber vorzugsweise maschinell gestützt. Insbesondere sind bei den Bewegungsabläufen und den Druckeinwirkungen druckmittelbetätigte Stellglieder, also insbesondere pneumatische oder hydraulische Kolben-Zylinder-Stellglieder, vorteilhaft einzusetzen. Die Bewegung der Andruckeinrichtung insgesamt zur Innenschablone hin ist zweckmäßig mit einem solchen Stellglied auszuführen. Darüberhinaus kann vorgesehen werden, dass die Andruckköpfe zum Abschluss des Formvorgangs quer zur Bewegungsrichtung der Andruckeinrichtung durch zwei in ihrer Bewegung gegeneinander gerichtete Stellglieder im Sinne eines Anpressdrucks zu bewegen sind oder auch, miteinander verkoppelt, durch ein Stellglied zueinander bewegt werden.

Andruckkräfte, die über den Bedarf der Vorbewegung der Andruckeinrichtung hinausgehend angesetzt werden, können dadurch aufgebracht werden, dass beispielsweise die Innenschablone entgegen der Bewegungsrichtung der Andruckeinrichtung, die dazu gesperrt bzw. blockiert wird, mit einem auf höhere Kräfte ausgelegten Stellglied vorgefahren wird.

Die Umformung eines Werkstücks in eine einheitliche oder jedenfalls abschnittsweise Bogenform erfolgt regelmäßig auf einer Arbeitsebene, die zumindest großenteils und vor allem in einem Bereich um die Innenschablone hin als glatte, zumindest im Wesentlichen geschlossene Tischfläche ausgebildet ist. Die Bewegung des Werkstücks bei der Umformung erfolgt mit Abstützung auf der Fläche. In typischerweise paralleler Gegenüberstellung zur Tischfläche kann eine Druckplatte vorgesehen werden, die, mit einem druckmittelbetätigten Stellglied niederfahrbar, eine ebene Ausrichtung des Werkstücks nach dem Biegen und auch eine glatte Oberfläche des Werkstücks, wenn es eine solche von der Arbeitsebene abgewandt aufweisen soll, mit Andruck sicherstellt. Die Druckplatte wird zweckmäßig mit der Andruckeinrichtung verfahren, so dass sie in der Ausgangslage gleichfalls zurückgezogen ist und die Arbeitsebene für eine Beschickung mit dem Werkstück und dessen Ausrichtung freihält.

Die Erfindung wird weiterhin in besonderer Weise durch eine Formleiste nach dem Oberbegriff des Anspruchs 14 zu der vorbeschriebenen Vorrichtung gemäß dem kennzeichnenden Teil des Anspruchs 14 gelöst. Eine Formleiste mit Quereinschnitten auf der Bogeninnenseite und damit auch zum Werkstück hin ist zwar aus der bereits zum Stand der Technik genannten DE 20 53 318 (Fig. 1) ersichtlich. Die Beschreibung der vorgenannten Patentschrift führt aber nur aus, dass die Formleiste bzw. flexibele Gegenschablone der Kontur des Werkstücks angepasst sein soll. Die Funktion der Formleiste ist jedoch weitergehend. Eine in den formgebenden Biegevorgang einbezogene Formleiste erfährt beim Biegen Verkürzungen auf der Bogeninnenseite, die bei Schlitzen in einem relativ formfesten Material zu Verengungen der Schlitze führen. Schlitze auf der Bogenaußenseite weiten sich beim Biegen.

Die sich damit ergebenden Stauchungen oder Streckungen der Formleiste übertragen sich auf das Werkstück an den Berührungsflächen. Generell wirken Quereinschnitte in den Formleisten, die in die Formleiste zur Herstellung bzw. Erleichterung der Biegsamkeit von der am Werkstück anliegenden Seite eingebracht sind, tendenziell den durch das Biegen bedingten Stauchungen bzw. Streckungen des Werkstücks entgegen.

Wenn nämlich das Werkstück beim Biegen auf der Bogenaußenseite gestreckt und damit der Gefahr kritischer Materialbeanspruchung und Wandverschwächungen ausgesetzt wird, bewirkt eine Formleiste mit Einschnitten von der Werkstückseite und Innenbogenseite eine gegengerichtete bzw. zurückhaltende Verschiebung. Da sich die Formleiste auf der Bogeninnenseite verkürzt, wird auch bei einem relativ gleitfähigen Material ein verkürzender bzw. zurückhaltender Längsschub von der Oberfläche her auf das Werkstück aufgebracht. Dieser wirkt bei der Umformung stabilisierend.

Noch wichtiger ist der Einfluss einer innenliegenden Formleiste zwischen Werkstück und Innenschablone, wenn diese Formleiste auf der dem Werkstück zugewandten Seite Quereinschnitte aufweist, die sich mit fortschreitendem Biegen auseinanderspreizen. Dies bewirkt in der Anlage zum Werkstück einen streckenden und damit glättenden Effekt auf der Bogeninnenseite des Werkstücks, die in besonderer Weise kritisch der Gefahr von Stauchungen und Ausbauchungen ausgesetzt ist. Die sich durch Aufweitung der Quereinschnitte streckenden Anlageflächen, der Formleiste stabilisieren und glätten die Oberfläche des Werkstücks.

Die Längenveränderungen der Formleiste beim Biegen an mit Quereinschnitten versehenen Anlageflächen sind allerdings in einer nach Erfahrung oder Erprodung vorgegebenen Weise zu bemessen, damit einerseits der gewünschte Effekt eintritt, andererseits aber nicht etwa Schäden durch zu starke Längseinwirkungen eintreten. Insofern sind die Quereinschnitte mit einem für die Längenänderungen vorgegebenen Maß in der Tiefe zu bemessen. Die Stauch- oder Spreizbewegungen an der Formleiste ergeben sich ersichtlich im Wesentlichen aus der Tiefe der Quereinschnitte. Ein hinter den Quereinschnitten durchlaufend vorzusehender Biegestreifen der Formleiste sichert deren Zusammenhalt und beinhaltet dann auch die beim Biegen stauch- und streckungsfrei innenliegende "neutrale Faser" der Formleiste.

Soweit der Querschnitt der Formleiste aus anderweitigen technischen Gründen über die Bemessung für die Quereinschnitte und einen verbindenden Biegestreifen-Rücken hinausgeht, sind dann auch von der gegenüberliegenden Seite Quereinschnitte vorzusehen. Der längs durchlaufende Biegestreifen befindet sich dann in einem Zwischenbereich zwischen beiderseitigen Quereinschnitten.

Ein besonderer Anlass zu einer über die Ausbildung eines Biegestreifens hinausgehenden Querschnittsform für die Formleiste ergibt sich bei der Formleiste für den Innenbogen, wenn diese mit einem rückwärtigen Längsprofil für einen Führungseingriff der Innenschablone ausgebildet werden soll. Es ist von Interesse, die Formleiste präzise mit der Innenschablone auszurichten, um ein Ausweichen der Formleiste und insbesondere des Werkstücks quer zur Biegeebene auszuschließen. Beispielsweise kann ein Längsprofil hierzu auf die Breite von Rollen an der Innenbogenschablone abgestimmt sein, wenn die Innenschablone etwa mit Konturstützen punktuell variabel gestaltet wird und diese Konturstützen endseitig mit Rollen zur besseren Anpassbarkeit versehen sind.

Die Formleiste kann vorteilhaft aus einem hochmolekularem Niederdruck-Polyethylen (HDPE) hergestellt werden, das aus sich heraus eine für den Erhalt des Querschnitts bei der Bogenformung wichtige Steifigkeit und Formfestigkeit aufweist, mit Hilfe von Quereinschnitten aber hinreichend biegsam zu gestalten ist. Dieses Material weist auch eine geringe Oberflächenhaftung auf, so dass das Werkstück nicht zu stark angegriffen oder gar beschädigt wird. Die damit zu erzielende Querschnittssteifigkeit erlaubt es auch, bei relativ niedrigen Warmformtemperaturen zu arbeiten, bei denen das Material des Werkstücks zwar einen relativ hohen Verformungswiderstand aber auch noch eine gute Querschnittstreue aufweist.

Ein Ausführungsbeispiel der Erfindung ist in der Zeichnung dargestellt und wird nachfolgend näher beschrieben. In der Zeichnung zeigen:
- Fig. 1: Draufsicht auf eine Vorrichtung gemäß der Erfindung,
- Fig. 2: Seitenansicht der Vorrichtung gemäß Fig. 1 und
- Fig. 3: Teilansicht von zwei Formleisten mit zwischenliegendem Werkstück gemäß einer weiteren Ausführungsform.

Eine in der Zeichnung insgesamt mit 1 bezeichnete Vorrichtung zum Umformen eines Kunststoffhohlprofil-Werkstücks ist nach Art eines Tisches mit einer Tischplatte 2, die eine Arbeitsfläche 3 als Oberfläche bietet, und Tischbeinen 4 ausgebildet. Eine insgesamt mit 5 bezeichnete Andruckeinrichtung ist mit einem Gestell 6 verfahrbar an der Tischplatte 2 abgestützt und durch Schienen, Rollen oder dergleichen (nicht dargestellt) gelagert, mit Hilfe eines unter dem Tisch angebrachten druckmittelbetätigten Stellglieds 7 in Richtung einander gegenüberliegender Längskanten 8, 9 des Tisches insgesamt in einer Bewegungsrichtung 10 aus der dargestellten Ausgangsposition in Richtung auf eine Innenschablone 11 verfahrbar. Auf der Arbeitsfläche 3 ist in der Zeichnung ein Werkstück 12 liegend dargestellt, welches auf zwei Seiten, sowohl zur Andruckeinrichtung 5 wie auch zur Innenbogenschablone 11 hin durch jeweils eine Formleiste 13 (für den Außenbogen bestimmt) bzw. 14 (für den Innenbogen bestimmt) eingefasst ist.

Zur Verformung ist das Werkstück 12 zuvor bereits auf eine Warmformtemperatur erhitzt, die in Abhängigkeit von dem Kunststoffmaterial des Werkstücks vorzugeben ist, aber auch in Bezug auf eine jeweilige Erweichungstemperatur unterschiedlich gewählt werden kann. Relativ hoch vorgegebene Temperaturen führen zu einer leichten Verformbarkeit des Materials, allerdings auch zu der Gefahr von unerwünschten Querschnittsverformungen. Die vorliegende Vorrichtung arbeitet mit relativ niedrigen Warmformtemperaturen, was eine wenig gestörte Oberfläche und vor allem eine hohe Querschnittstreue des gebogenen Werkstückes erzielt, aber durch den nachfolgend noch zu erläuternden besonderen Umformungsvorgang erst ermöglicht wird. Das hier aus Darstellungsgründen kurz gezeichnete Werkstück 12 ist zu beiden Enden hin beliebig verlängert zu denken, wenn sich an den zu formenden Bogen ein- oder beidseitig gerade Werkstückenden nahtlos anschließen sollen, die auch zuvor schon von einer Erhitzung auf Warmformtemperatur ausgespart werden konnten.

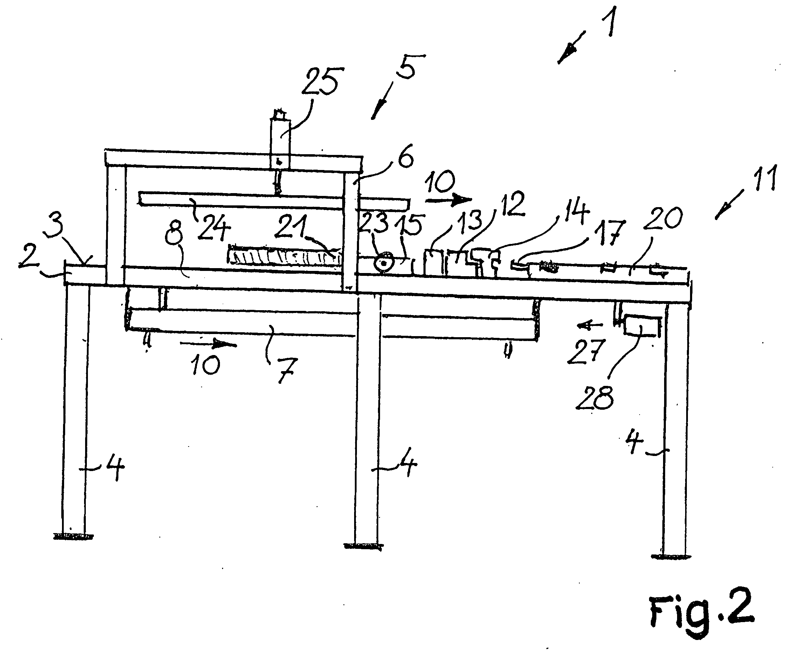

Die Formleisten 13 und 14 sind, wie die Ansicht gemäß Fig. 2 andeutet, dem Au-ßenquerschnitt des Werkstücks 12 auf den beiden seitlich gegenüberliegenden Seiten angepasst und in Längsrichtung biegsam, wobei aber die Anpassung an die Au-ßenform des Werkstücks erhalten bleiben muss. Dies kann beispielsweise durch Formleisten aus hochmolekularem und insofern festem Kunststoffmaterial erlangt werden, wenn die Leisten einseitig oder beidseitig kammförmig eingeschnitten sind, um die Längsbiegsamkeit herzustellen, ohne den Querschnitt und vor allem dessen Anpassung an das Werkstück zu verändern.

Die Andruckeinrichtung 5 weist zwei Andruckköpfe 15, 16 auf, die quer zu der Bewegungsrichtung 10 soweit voneinander beabstandet sind, dass sie den zu erzielenden Bogen übergreifen. Diese Andruckköpfe 15, 16 kommen als erstes mit der für den Außenbogen bestimmten Formleiste 13 in Anlage, um das Paket aus Formleisten 13, 14 und Werkstück 12 gegen die Innenschablone 11 vorzuschieben und dann von den Außenseiten her gleichförmig um die Innenschablone 11 mit den außenliegenden Angriffspunkten herumzuziehen.

Im dargestellten Fall, in dem die Formleiste 14 mit ihrer profilgerechten Anpassung nicht nur den Querschnitt des Werkstücks 12 abstützt sondern auch als durchgehende Formleiste Andruckkräfte in Längsrichtung verteilt, kann sich die Innenschablone 11 auf punktuelle Abstützungen für den zu erzielenden Bogen beschränken. Hierzu dienen Konturstützen 17 mit Stabkörpern 18, die in Führungen 19 einer Platte 20 festklemmbar gelagert sind. Die Konturstützen 17 können für unterschiedliche Bogenweiten nach außen herausgezogen oder nach innen eingeschoben und in der Position, in der sie unter Einrechnung des von der Formleiste 14 vergrößerten Innenradius des zu erzielenden Bogens einzustellen sind, festgeklemmt werden. Details der Lagerung und Fixierung der Konturstützen 17 können handwerklicher Art sein und sind nicht näher dargestellt oder beschrieben.

Die Andruckköpfe 15, 16 der Andruckeinrichtung werden funktionell mit zunehmender Vorbewegung durch ein flexibles Zugelement 21 in Form eines Gurtes unterstützt, der in seiner Länge auf den gewünschten Außenbogen des Werkstücks unter Zwischenschaltung der Formleiste 13 bemessen ist und der sich während der Andruckbewegung in Richtung des Pfeiles 10 nach und nach vollständig an die Formleiste 13 anlegt. Die Umformung des Werkstücks, die zunächst auf eine geringe Belastung des Werkstücks mit bestmöglicher Querschnittstreue ausgelegt ist, wird zum Ende der Bogenformung zur Vergleichmäßigung und auch zur Festlegung präziser Bogenmaße durch einen gleichmäßigen Andruck von allen Seiten fixiertgestellt.

In dieser Hinsicht sind die Andruckköpfe 15, 16 nicht unbeweglich an dem Gestell 6 der Andruckeinrichtung 5 angebracht sondern beweglich zueinander quer zu der Bewegung 10 der Andruckeinrichtung. Zwei druckmittelbetätigte Stellzylinder 22, 23, die auf gegenüberliegenden Seiten am Gestell 6 fest angebracht sind, lagern die Andruckköpfe 15, 16, um diese zum Schluss der Umformung gegensinnig und auf die Innenbogenschablone 11 hin zu bewegen.

An dem Gestell 6 ist weiterhin über der Arbeitsfläche 3eine Druckplatte 24 über druckmittelbetätigte Stellglieder 25, 26 vertikal beweglich gelagert, um mit der Andruckeinrichtung 5 über die Innenbogenschablone 11 in vorzufahren und dann durch Niederfahren mit Hilfe der Stellglieder 25, 26 das Werkstück gegen die Arbeitsfläche 3 anzudrücken und in der gewünschten Ebene auszurichten.

Zusätzlich ist die Innenschablone 11 in Richtung eines Pfeils 27 gegenüber der Tischplatte 2 beweglich gelagert und mit Hilfe eines druckmittelbetätigten Stellgliedes 28 zum Abschluss des Formvorgangs gegen die Andruckeinrichtung bzw. gegen die Andruckköpfe 15, 16 und das Zugmittel 21 vorfahrbar. Diese zum Abschluss der Formung vorzusehende Gegenbewegung erlaubt es, ein Stellglied 28 mit geringem Hub aber großen Stellkräften vorzusehen, ohne das Stellglied 7 für das Vorfahren der Andruckeinrichtung 5 entsprechend auf hohe Endkräfte auszulegen. Dies ist jedenfalls dann möglich, wenn das Stellglied 7 in seiner Andruckstellung zu fixieren oder festzubremsen ist. Eine gestufte Stellgliedeinrichtung mit den Stellgliedern 7 und 28 entspricht auch der unterschiedlichen Vorgabe der Vorschub- bzw. Andruckkräfte während der Umformbewegung einerseits und bei der abschließenden Bogenfixierung andererseits.

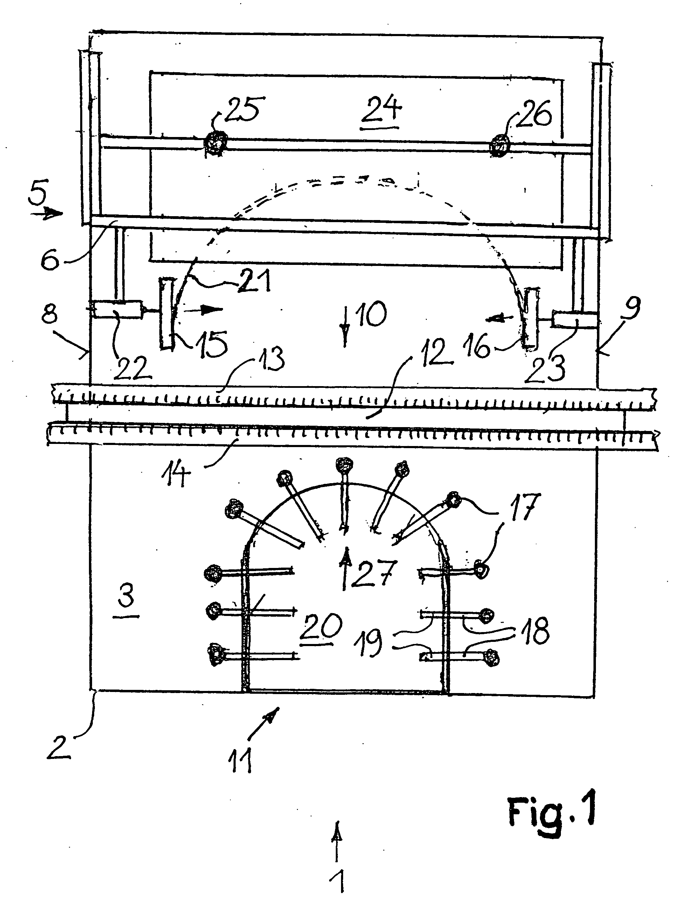

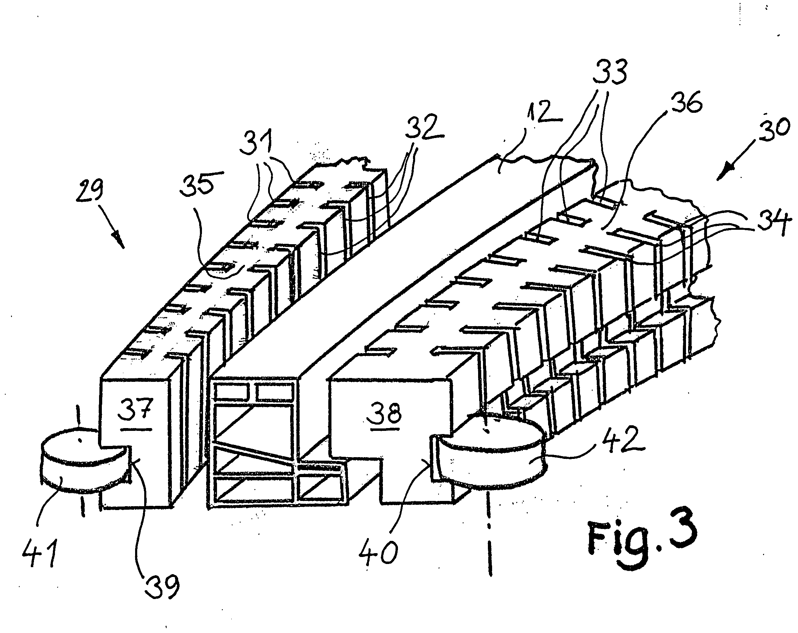

In Fig. 3 ist das Werkstück 12 mit seinem Endquerschnitt dargestellt, der das komplexe Kunststoffhohlprofil mit Kammern und Zwischenwänden erkennen lässt. Das Werkstück 12 wird von einer Formleiste 29 für den Außenbogen und einer Formleiste 30 für den Innenbogen in der in Fig. 1 und Fig. 2 dargestellten Weise flankiert. Allerdings sind beide Formleisten 29, 30 jeweils beidseitig quer zu deren Längserstreckung und quer zu der vorgegebenen Biegeebene innen und außen mit Quereinschnitten 31, 32, 33 bzw. 34 versehen. Die Quereinschnitte enden mit einem Abstand voneinander, der einen längs durchlaufenden Biegestreifen 35 bzw. 36 frei lässt, welcher so schmal bemessen wird, dass die Formleiste trotz eines von Haus aus relativ steifen Materials wie etwa einem hochmolekularen Niederdruck-Polyethylen in der gewünschten Weise biegbar ist, allerdings auch breit und damit steif genug verbleibt, um eine stetige Biegelinie zu erzielen.

Die bei der angestrebten Bogenform innenliegenden Quereinschnitte 32 bzw. 34 werden in ihrem Abstand dicht genug und in ihrer Weite breit genug vorgegeben, um beim Biegen ohne Zusammenstoß der Quereinschnittseiten eine Biegelinie zu ermöglichen. Die zur Bogenaußenseite hin gelegenen Quereinschnitte 31 und 33 werden beim Biegen auseinandergespreizt und sind hinsichtlich der Quereinschnitts-Breite wie auch hinsichtlich des Zwischenabstandes weniger kritisch.

In Bezug auf die Quereinschnitts-Tiefe sind die das Werkstück 12 kontaktierenden Anlagebereiche mit den Quereinschnitten 32 bzw. 33 kritisch. Die Formleiste 29 mit den zum Werkstück 12 hin weisenden Bereichen mit den Quereinschnitten 32 erfährt beim Biegevorgang eine Verkürzung, die der Streckung des Werkstücks 12 an der Bogenaußenseite entgegenwirkt. Dies hat einen durchaus erwünschten Rückhalteeffekt. Allerdings hängt dieser Rückhalteeffekt von der Tiefe der Quereinschnitte 32 ab, die aber auf eine dosierte Einwirkung auf das Werkstück hin zu bemessen ist. Aus einer Vorgabe für eine gewünschte Steifigkeit - und Breite - des Biegestreifens 35 ergibt sich dann auch ein Maß für die Quereinschnitte 31 von der Außenseite der Formleiste 29 her.

Auf der Gegenseite wird die Formleiste 30 im Bereich der Quereinschnitte 33 - durch Aufweitung der Quereinschnitte beim Biegen - gedehnt, was zur Vermeidung von Stauchfalten und zur Glättung der bogeninnenseitig liegenden Oberflächen des Werkstücks 12 vorteilhaft und wichtig ist. Die Verformung der Formleiste 30 im Anlagebereich zum Werkstück 12 ist also bei der Bogenformung nutzbar. Auch diese Einwirkung setzt allerdings eine Dosierung voraus, die insbesondere mit Hilfe der Tiefe der Quereinschnitte 33 einstellbar ist. Insofern ist dann, wenn die anzusetzende Tiefe der Quereinschnitte 33 und die Breite eines Biegestreifens 36 gemäß Vorgabe die Gesamtbreite der Formleiste nicht ausnutzen, mit den Quereinschnitten 34 auf der dem Werkstück abgelegenen Seite der Formleiste 30 der Biegestreifen 36 einzuengen und für eine ausreichende Flexibilität der Formleiste 30 für den Biegevorgang zu sorgen.

Aus den in Fig. 3 ersichtlichen Stirnflächen 37 bzw. 38 der Formleisten 29 und 30 ist zum Werkstück hin die Querschnittsanpassung an das Werkstück 12 zu erkennen.

Auf den Rückseiten sind längs durchlaufende Nuten 39 und 40 zu erkennen, in die Rollen 41 und 42 passender Breite eingreifen. Die dargestellte Rolle 42 steht dabei für eine endseitige Ausstattung der Konturstützen 17 der Innenschablone gemäß Fig. 1, womit die Konturstützen Ausgleichsbewegungen in Richtung der Bogenlinie gegenüber der anliegenden Formleiste ermöglichen.

Auf der Seite der außenliegenden Formleiste 29 können Rollen wie die Rolle 41 (oder auch außenliegende Profile der Andruckeinrichtung 5 entsprechenden Querschnitts) vorgesehen werden. Der Eingriff in die Nuten 39 bzw. 40 dient dabei der Führung der Formleisten 29 und 30 innerhalb der Biegeebene und damit parallel zur Arbeitsfläche 3 gemäß Fig. 1 während des Biegevorgangs, ehe dort zum Abschluss des Biegevorgangs die Druckplatte 24 das Werkstück nachrichtet.

## Patentansprüche

1. Vorrichtung (1) zur Umformung eines auf eine Warmformtemperatur erhitzten geraden langgestreckten Kunststoffhohlprofil-Werkstücks (12) in einen Bogen, bei der das Werkstück (12) zumindest auf einer für den Außenbogen bestimmten Seite durch eine biegsame, profilgerecht angepasste Formleiste (13, 29) abgestützt ist und quer zu seiner Längserstreckung bewegbar auf einer Arbeitsebene (3) zwischen einer den Bogen zu einer Innenkontur bestimmenden Innenbogenschablone (11) und einer gegen die Innenbogenschablone beweglichen Andruckeinrichtung (5) mit zwei gegen die Formleiste (13, 29) drückenden Andruckköpfen (15, 16) liegt, **dadurch gekennzeichnet, dass** die Andruckköpfe (15, 16) in einer Ausgangsstellung zur Umformung zwischeneinander einen den zu formenden Bogen übergreifenden Abstand aufweisen und bei der Umformung aus der Ausgangsstellung mit Andruck gegen außenliegende Bereiche der Formleiste (13, 29) für den Außenbogen etwa parallel zueinander gegen die Innenbogenschablone (11) bewegbar sind.

2. Vorrichtung nach Anspruch 1, **dadurch gekennzeichnet, dass** die Andruckeinrichtung (5) zwischen den Andruckköpfen zumindest ein weiteres auf eine Andruck-Endstellung eingestelltes Andruckelement (21) aufweisen.

3. Vorrichtung nach Anspruch 2, **dadurch gekennzeichnet, dass** das Andruckelement als flexibles Zugelement (21) mit den Andruckköpfen (15, 16) verbunden ist.

4. Vorrichtung nach einem der Ansprüche 1 bis 3, **dadurch gekennzeichnet, dass** die Andruckeinrichtung (5) durch zumindest ein druckmittelbetätigtes Stellglied (7) gegen die Innenschablone (11) vorfahrbar ist.

5. Vorrichtung nach Anspruch 4, **dadurch gekennzeichnet, dass** das druckmittelbetätigte Stellglied (7) zumindest in einer vorgefahrenen Endstellung festsetzbar ist und dass die Innenschablone gegen die Andruckeinrichtung (5) durch ein druckmittelbetätigtes Stellglied (28) bewegbar ist.

6. Vorrichtung nach einem der Ansprüche 1 bis 5, **dadurch gekennzeichnet, dass** die Andruckköpfe (15, 16) quer zur Bewegungsrichtung der Andruckeinrichtung (5) durch zumindest ein druckmittelbetätigtes Stellglied (22, 23) zueinander bewegbar sind.

7. Vorrichtung nach einem der Ansprüche 1 bis 6, **dadurch gekennzeichnet, dass** die Arbeitsebene (3) zumindest in einem Bereich um die Innenschablone (11) als ebene, im Wesentlichen geschlossene Fläche ausgebildet ist.

8. Vorrichtung nach einem der Ansprüche 1 bis 7, **dadurch gekennzeichnet, dass** über der Arbeitsebene (3) eine mit zumindest einem druckmittelbetätigten Stellglied (25, 26) niederfahrbare Druckplatte (24) angeordnet ist.

9. Vorrichtung nach Anspruch 8, **dadurch gekennzeichnet, dass** die Druckplatte (24) an der Andruckeinrichtung (5) und mit dieser zur Innenschablone (11) vorbeweglich gelagert ist.

10. Vorrichtung nach einem der Ansprüche 1 bis 9, **dadurch gekennzeichnet, dass** das Werkstück (12) auch auf der für den Innenbogen bestimmten Seite durch in eine biegsame, profilgerecht angepasste Formleiste (14, 30) abgestützt ist.

11. Vorrichtung nach Anspruch 10, **dadurch gekennzeichnet, dass** die Innenbogenschablone (11) über ihren Umfang mit einer Reihe zueinander beabstandeter, nach außen und innen verlagerbarer Konturstützen (17) versehen ist.

12. Vorrichtung nach Anspruch 11, **dadurch gekennzeichnet, dass** die Konturstützen (15) Stabkörper aufweisen, die in nach außen und innen gerichteten Führungen (19) mit Klemmeinrichtungen gelagert sind.

13. Vorrichtung nach Anspruch 11 oder 12, **dadurch gekennzeichnet, dass** die Konturstützen (17) mit endseitigen Laufrollen (42) zur Anlage an die Formleiste (14, 30) versehen sind.

14. Formleiste (13, 14, 29, 30) für eine Vorrichtung (1) nach einem der Ansprüche 1 bis 13 aus einem druckfesten aber biegsamen Werkstoff, wobei eine an dem Werkstück (12) anzulegende Seite an das Außenprofil des Werkstücks (12) angepasst ist und wobei die Formleiste (13, 29) auf dieser Seite zumindest in einem zur Bogenformung bestimmten Längsbereich kammartig mit Quereinschnitten (32) versehen ist, hinter denen ein längs durchlaufender Biegestreifen (35) verbleibt, **dadurch gekennzeichnet, dass** die Quereinschnitte (32) mit einer Quereinschnitts-Tiefe auf ein vorgegebenes Maß für die Längenänderung der am Werkstück (12) anzulegenden Seite bei Biegung der Formleiste (13, 29) ausgelegt sind, so dass die Längenänderung beim Biegen mit einem Rückhalteeffekt der Streckung des Werkstücks (12) an der Bogenaußenseite bzw. der Stauchung des Werkstücks (12) an der Bogeninnenseite entgegenwirkt.

15. Formleiste (13, 14, 29, 30) nach Anspruch 14, **dadurch gekennzeichnet, dass** sie beidseitig kammartig mit Quereinschnitten (31, 32) versehen ist, zwischen denen ein längs durchlaufender Biegestreifen (29) verbleibt.

16. Formleiste (14, 30) nach Anspruch 14 oder 15 zur Abstützung des Werkstücks (12) auf der für den Innenbogen bestimmten Seite, **dadurch gekennzeichnet, dass** sie auf der der Innenschablone (11) zugewandten Seite ein Längsprofil (40) zu einem Führungseingriff einer Innenschablone (11) aufweist.

17. Formleiste (1) nach Anspruch 16, **dadurch gekennzeichnet, dass** das Längsprofil eine Längsnut (40) zur Aufnahme von Rollen (42) an voneinander beabstandeten Konturstützen (17) der Innenschablone (11) aufweist.

18. Formleiste (13, 14, 29, 30) nach einem der Ansprüche 14 bis 17, **dadurch gekennzeichnet, dass** sie aus hochmolekularem Niederdruck-Polyäthylen besteht.

## Claims

1. Device (1) for shaping a straight, elongate plastics hollow profile workpiece (12), which is heated to a hot-forming temperature, into an arc, in which device the workpiece is supported (12) at least on a side thereof intended for the outer arc by a flexible shaping bar (13, 29) that is adapted to conform with the profile, and rests, so as to be movable transversely to a longitudinal extension, on a working plane (3) between an inner arc template (11) that determines the inner contour of the arc and a pressing apparatus (5) that can be moved against the inner arc template and that comprises two pressing heads (15, 16) that press against the shaping bar (13, 29), **characterised in that** in an initial position for shaping, the pressing heads (15, 16) have a distance between one another that extends over the arc to be formed and, during shaping, can be moved out of the initial position approximately mutually parallel against the inner arc template (11) by pressing against external regions of the shaping bar (13, 29) for the outer arc.

2. Device according to claim 1, **characterised in that** the pressing apparatus (5) comprises at least one additional pressing element (21), which is adjusted to a pressing end position, between the pressing heads.

3. Device according to claim 2, **characterised in that** the pressing element is connected to the pressing heads (15, 16) as a flexible tensile element (21).

4. Device according to any of claims 1 to 3, **characterised in that** the pressing apparatus (5) can be moved forwards against the inner template (11) by at least one actuator (7) that is operated by a pressure medium.

5. Device according to claim 4, **characterised in that** the actuator (7) that is operated by a pressure medium can be fixed at least in a forward end position, and **in that** the inner template can be moved against the pressing apparatus (5) by an actuator (28) that is operated by a pressure medium.

6. Device according to any of claims 1 to 5, **characterised in that** the pressing heads (15, 16) can be moved, by means of at least one actuator (22, 23) that is operated by a pressure medium, towards one another transversely to the direction of movement of the pressing apparatus (5).

7. Device according to any of claims 1 to 6, **characterised in that** the working plane (3) is formed at least in a region around the inner template (11) as a planar, substantially closed surface.

8. Device according to any of claims 1 to 7, **characterised in that** a press plate (24), which can be lowered by means of at least one actuator (25, 26) that is operated by a pressure medium, is arranged above the working plane (3).

9. Device according to claim 8, **characterised in that** the press plate (24) is mounted on the pressing apparatus (5) and so as to be movable towards the inner template (11) by means of said apparatus.

10. Device according to any of claims 1 to 9, **characterised in that** the side of the workpiece (12) that is intended for the inner arc is also supported by means of a flexible shaping bar (14, 30) that is adapted to conform with the profile.

11. Device according to claim 10, **characterised in that** the inner arc template (11) is provided over the periphery thereof with a row of mutually spaced contour supports (17) that can be shifted outwards and inwards.

12. Device according to claim 11, **characterised in that** the contour supports (15) comprise rod bodies that are mounted, by means of clamping apparatuses, in guideways (19) that are directed outwards and inwards.

13. Device according to either claim 11 or claim 12, **characterised in that** the contour supports (17) are provided at the ends thereof with rollers (42) for contacting the shaping bar (14, 30).

14. Shaping bar (13, 14, 29, 30) for a device (1) according to any of claims 1 to 13 made of a pressure-resistant yet flexible material, a side thereof that is to be placed against the workpiece (12) being adapted to the outer profile of the workpiece (12) and the shaping bar (13, 29) being provided on this side, at least in a longitudinal region intended for forming an arc, with transverse recesses (32) in a comb-like manner, behind which recesses there is a longitudinally extending bending strip (35), **characterised in that** the transverse recesses (32) are designed having a transverse recess depth of a predetermined dimension for changing the length of the side to be placed against the workpiece (12) when the shaping bar (13, 29) is bent, such that changing the length when bending counteracts a retaining effect of the stretching of the workpiece (12) on the outside of the arc or of the compression of the workpiece (12) on the inside of the arc.

15. Shaping bar (13, 14, 29, 30) according to claim 14, **characterised in that** it is provided on both sides thereof with transverse recesses (31, 32) in a comb-like manner, between which recesses there is a longitudinally extending bending strip (29).

16. Shaping bar (14, 30) according to either claim 14 or claim 15 for supporting the workpiece (12) on the side thereof intended for the inner arc, **characterised in that** the bar comprises, on the side thereof facing the inner template (11), a longitudinal profile (40) for guiding engagement with an inner template (11).

17. Shaping bar (1) according to claim 16, **characterised in that** the longitudinal profile comprises a longitudinal groove (40) for receiving rollers (42) on mutually spaced contour supports (17) of the inner template (11).

18. Shaping bar (13, 14, 29, 30) according to any of claims 14 to 17, **characterised in that** it consists of low-pressure polyethylene of high molecular weight.

## Revendications

1. Dispositif (1) de formage d'une pièce profilée creuse (12) en matière plastique, allongée et droite, qui est chauffée à une température de thermoformage, pour conférer une courbure, dispositif dans lequel la pièce (12) est supportée, au moins sur un côté destiné à la courbure extérieure, par une barre de formage (13, 29) flexible de profil adapté et est déplaçable transversalement à son extension longitudinale sur un plan de travail (3) entre un gabarit de courbure intérieure (11) destiné à conférer à la courbure un contour intérieur et un moyen de pressage (5) déplaçable contre le gabarit de courbure intérieure comportant deux têtes de pressage (15, 16) pressant contre la barre de formage (13, 29), **caractérisé en ce que** les têtes de pressage (15, 16) présentent, dans une position initiale en vue du formage entre elles, une distance couvrant la courbure à former et **en ce qu'**elles sont déplaçables à peu près parallèlement l'une à l'autre contre le gabarit de courbure intérieure (11) lors du formage depuis la position initiale en pressant contre les zones extérieures de la barre de formage (13, 29) destinées à la courbure extérieure.

2. Dispositif selon la revendication 1, **caractérisé en ce que** le moyen de pressage (5) comporte, entre les têtes de pressage, au moins un autre élément de pressage (21) à une position extrême de pressage.

3. Dispositif selon la revendication 2, **caractérisé en ce que** l'élément de pressage est relié, en tant qu'élément de traction flexible (21), aux têtes de pressage (15, 16).

4. Dispositif selon l'une des revendications 1 à 3, **caractérisé en ce que** le moyen de pressage (5) est déplaçable par au moins un actionneur, actionné par un agent sous pression (7), contre le gabarit intérieur (11).

5. Dispositif selon la revendication 4, **caractérisé en ce que** l'actionneur (7), actionné par un agent sous pression, peut être immobilisé au moins dans une position extrême avancée et **en ce que** le gabarit intérieur peut être déplacé contre le moyen de pressage (5) par un actionneur (28) actionné par un agent sous pression.

6. Dispositif selon l'une des revendications 1 à 5, caractérisé les têtes de pression (15, 16) transversalement à la direction de déplacement du dispositif de pression (5) par au moins un actionneur actionné par un moyen de pression (22, 23) sont mutuellement mobiles.

7. Dispositif selon l'une des revendications 1 à 6, caractérisé le plan de travail (3) a la forme d'une surface plane sensiblement fermée au moins dans une zone autour du gabarit intérieur (11).

8. Dispositif selon l'une des revendications 1 à 7, **caractérisé en ce qu'**une plaque de pression (24), pouvant être abaissée au moyen d'au moins un actionneur (25, 26) actionné par un agent sous pression, est disposée au-dessus du plan de travail (3).

9. Dispositif selon la revendication 8, **caractérisé en ce que** la plaque de pression (24) est montée sur le moyen de pressage (5) de façon à pouvoir être avancée avec celui-ci par rapport au gabarit intérieur (11).

10. Dispositif selon l'une des revendications 1 à 9, **caractérisé en ce que** la pièce (12) est également supportée, du côté destiné à la courbure intérieure, par une barre de formage (14, 30) flexible de profil adapté.

11. Dispositif selon la revendication 10, **caractérisé en ce que** le gabarit de courbure intérieure (11) est pourvu sur sa circonférence d'une série de supports de contour (17) espacés les uns des autres et déplaçables vers l'extérieur et vers l'intérieur.

12. Dispositif selon la revendication 11, **caractérisé en ce que** les supports de contour (15) comportent des corps de tige qui sont montés dans des guides (19) dirigés vers l'extérieur et vers l'intérieur et munis de moyens de serrage.

13. Dispositif selon la revendication 11 ou 12, **caractérisé en ce que** les supports de contour (17) sont munis de galets d'extrémité (42) destinés à venir en appui sur la barre de formage (14, 30).

14. Barre de formage (13, 14, 29, 30) destinée à un dispositif (1) selon l'une des revendications 1 à 13, la barre de formage étant en une matière souple mais résistante à la pression, un côté destiné à venir en appui sur la pièce (12) étant adapté au profil extérieur de la pièce (12) et la barre de formage (13, 29) étant munie sur ce côté, au moins dans une zone longitudinale destinée au formage de la courbure, à la manière d'un peigne, d'incisions transversales (32) en arrière desquelles subsiste une bande flexible (35) s'étendant longitudinalement de manière continue, **caractérisée en ce que** les incisions transversales (32) sont conçues avec une profondeur de dimension prédéterminée pour le changement de longueur du côté destiné à venir en appui sur la pièce (12) lors de la flexion de la barre de formage (13, 29) de sorte que le changement de longueur lors de la flexion réagit avec un effet de retenue de l'extension de la pièce (12) du côté extérieur de la courbure ou lors la compression de la pièce (12) du côté intérieur de la courbure.

15. Barre de formage (13, 14, 29, 30) selon la revendication 14, caractérisée qu'elle est pourvue des deux côtés, à la manière d'un peigne, d'incisions transversales (31, 32), entre lesquelles subsiste une bande flexible (29) s'étendant longitudinale de manière continue.

16. Barre de formage (14, 30) selon la revendication 14 ou 15 destinée à supporter la pièce (12) du côté destiné à la courbure intérieure, **caractérisée en ce qu'**elle présente, du côté du gabarit intérieur (11), un profil longitudinal (40) destiné à un engagement de guidage d'un gabarit intérieur (11) .

17. Barre de formage (1) selon la revendication 16, **caractérisée en ce que** le profil longitudinal comporte une rainure longitudinale (40) destinée à recevoir les galets (42) au niveau de supports de contour (17), espacés les uns des autres, du gabarit intérieur (11).

18. Barre de formage (13, 14, 29, 30) selon l'une des revendications 14 à 17, **caractérisée en ce qu'**elle est constituée de polyéthylène basse pression de poids moléculaire élevé.
